# EUROPÄISCHE PATENTSCHRIFT

(11) **EP 1 695 753 B1**
(45) Veröffentlichungstag und Bekanntmachung des Hinweises auf die Patenterteilung: **04.06.2014**
(21) Anmeldenummer: 06101623.4
(22) Anmeldetag: 14.02.2006
(51) Int. Cl.: B01D 46/24, F16N 39/00, F16N 39/06, B01D 35/30, B01D 36/00, B01D 46/00, B01D 27/08, B01D 29/21, F01M 13/04

(54) **Filterelement mit Drainagerohr**
Filter element with drainage tube
Element filtrante avec un tube drainage

(30) Priorität: 28.02.2005 DE 102005009680
(43) Veröffentlichungstag der Anmeldung: 30.08.2006
(73) Patentinhaber: MANN+HUMMEL GmbH, 71638 Ludwigsburg (DE)
(72) Erfinder: Gillenberg, Eric, 67346, Speyer (DE); Heikamp, Wolfgang, 67165 Waldsee (DE); Hirsch, Melanie, 67346, Speyer (DE); Eppel, Otto, 67346, Speyer (DE); Pölloth, Sandra, 67487, Maikammer (DE); Winter, Michael, 67373, Dudenhofen (DE)

(56) Entgegenhaltungen:
- EP-A- 0 310 407
- WO-A-03/002233

## Beschreibung

### Stand der Technik

Die Erfindung betrifft ein Filterelement, insbesondere ein Luftentölelement, zur Abscheidung einer Flüssigkeit mit einem Drainagerohr, durch welches die abgeschiedene Flüssigkeit entfernt werden kann, nach dem Oberbegriff des Patentanspruches 1.

Weiterhin sind eine das Drainagerohr enthaltende Drainageeinrichtung sowie eine Filtereinrichtung unter Schutz gestellt.

Filterelemente nach dem Oberbegriff sind allgemein zugänglicher Stand der Technik. Sie werden beispielsweise zur Entölung von Druckluft in Druckluftsystemen verwendet, die durch einen ölgeschmierten Kompressor gespeist werden. Eine andere Anwendungsmöglichkeit ist die Entölung von Kurbelgehäusegasen einer Brennkraftmaschine. Bei Filterelementen, die von innen nach außen durchströmt werden, sammelt sich die abgeschiedene Flüssigkeit im Inneren der Filterpatrone, welche bevorzugt zylindrisch ausgeführt ist. Von dort wird sie mit Hilfe eines Drainagerohres abgesaugt, welches in das Innere der Filterpatrone hineinreicht. Das Dokument WO 03/002233 offenbart ein solches Filterelement mit einem Drainagerohr. Dieses Drainagerohr kann integraler Bestandteil der oberen Endscheibe des Filterelementes sein, so dass eine Fixierung in der für die Absaugung notwendigen Lage möglich ist. Jedoch ist ein Filterelement mit fest eingebautem Drainagerohr umständlich in der Herstellung, weswegen das Filterelement wenig wirtschaftlich ist.

Aufgabe der Erfindung ist es daher, ein Filterelement mit Drainagerohr zu schaffen, welches kostengünstig in der Herstellung ist. Diese Aufgabe wird durch die Merkmale des Patentanspruches 1 gelöst.

### Zeichnung

Weitere Einzelheiten der Erfindung werden in der Zeichnung anhand von schematischen Ausführungsbeispielen beschrieben. Hierbei zeigt
- Figur 1: die erfindungsgemäße Filtereinrichtung im Mittelschnitt,
- Figur 2: ein Ausführungsbeispiel, bei dem lediglich die Abdichtung zwischen Deckel und Drainagerohr sichtbar ist und
- Figur 3: eine weitere Ansicht der in Figur 2 gezeigten Darstellung.

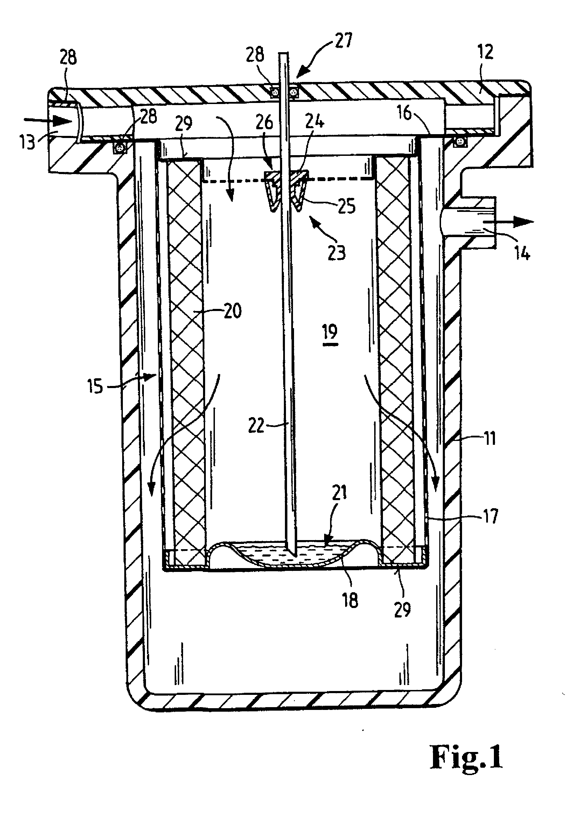

Die Filtereinrichtung gemäß Figur 1 weist ein Gehäuse 11 mit einem Deckel 12 auf wobei durch das Gehäuse ein Einlass 13 und ein Auslass 14 für das zu filternde Fluid, insbesondere ein Gas, gebildet ist. Zwischen Gehäuse 11 und Deckel 12 ist ein Filterelement 15 mit einer oberen Endscheibe 16 mittels einer Klemmverbindung gehalten. Das Filterelement 15 weist weiterhin einen Stützkörper 17 und eine untere Endscheibe 18 auf.

Der Weg des zu filternden Gases ist durch Pfeile angedeutet. Er reicht vom Einlass 13 durch nicht dargestellte Öffnungen in der oberen Endscheibe 16 in einen Innenraum 19 des Filterelementes 15 hinein, von wo aus der Gasstrom durch ein Filtermedium 20 und den ebenfalls durchlässigen Stützkörper 17 zum Auslass 14 geleitet wird. Dabei sammelt sich in einer Vertiefung 21 der unteren Endscheibe 18 die abgeschiedene Flüssigkeit, welche durch ein Drainagerohr 22 aus dem Innenraum 19 herausgesogen werden kann.

Das Drainagerohr 22 ist Teil einer Drainageeinrichtung 23, welche unter anderem auch einen Verbinder 24 mit Schnappnasen 25 aufweist. Der Verbinder ist also als stopfenförmiges Bauteil ausgestaltet, welches in eine lochförmige Aufnahme 26 in der Endscheibe gesteckt werden kann. Der Verbinder ist auf das Drainagerohr 22 gesteckt und mit diesem verklebt. Zur Dichtung des Drainagerohrs an einem Durchgang 27 im Deckel 12 sowie zur Dichtung zwischen Deckel 12 und Gehäuse 11 werden Dichtringe 28 verwendet. Eine Abdichtung des Filtermediums erfolgt durch Einkleben von dessen Stirnseiten 29 in entsprechende Absätze der oberen und unteren Endscheibe 16, 18.

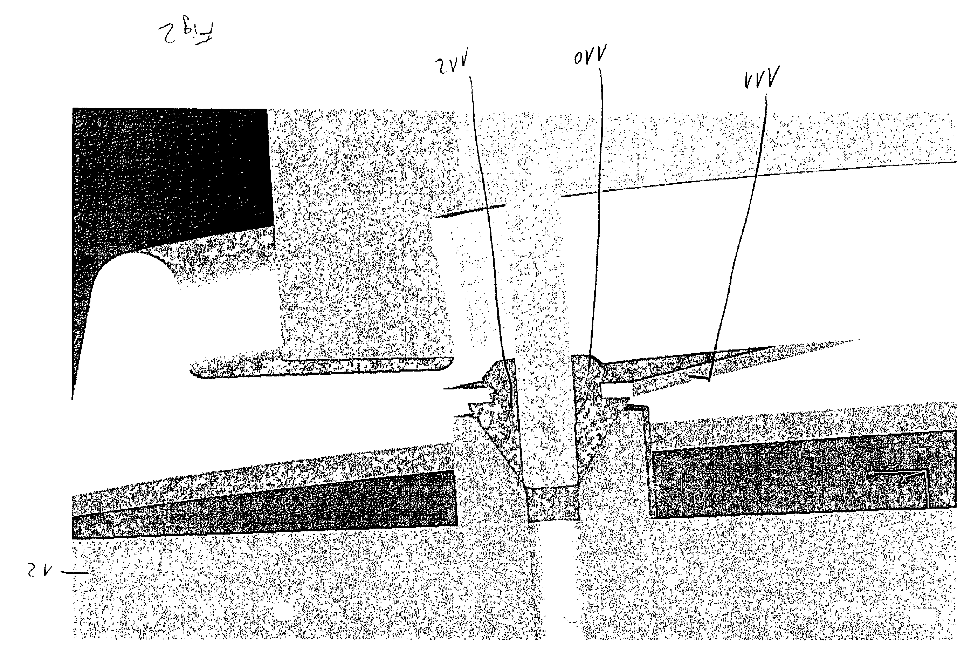

In Figur 2 ist eine Ausführung dargestellt, bei welcher am Deckel 12 ein Anschlussstutzen 112 für ein Drainagerohr vorgesehen ist. Der Anschlussstutzen ist in Richtung auf das Drainagerohr hin konisch gestaltet. Innerhalb dieser Gestaltung befindet sich eine Dichtung 110. Diese ist in ein halbkreisförmiges Halteblech 111 eingeknüpft.

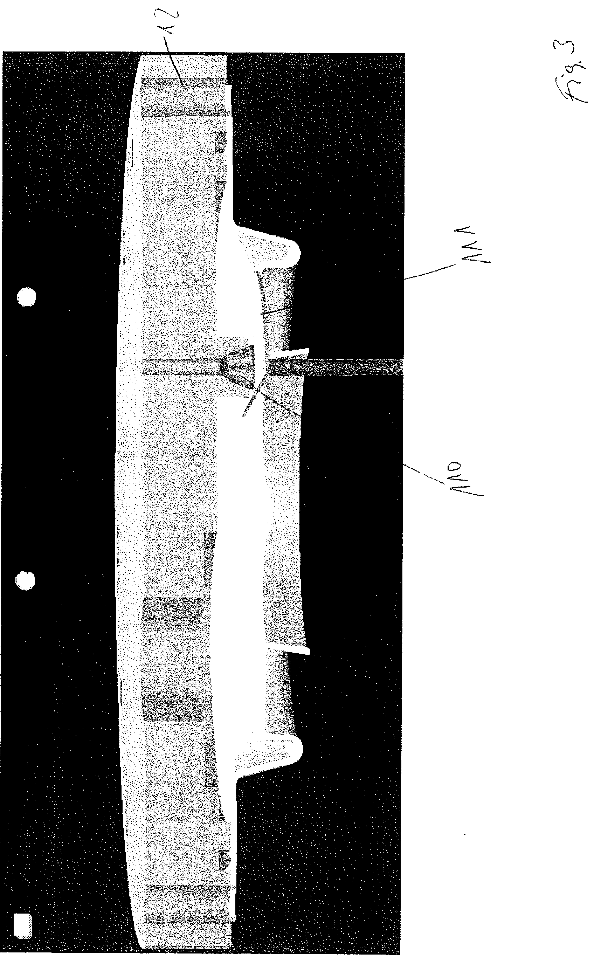

In Figur 3 ist ebenfalls in perspektivischer Schnittdarstellung nochmals dieser Aufbau gezeigt. Es ist ersichtlich, dass durch die Dichtung 110 eine zuverlässige Abdichtung des Drainagerohrs an dem Deckel 12 möglich ist. Außerdem besteht durch den Dichtungsaufbau und die Dichtungsgestaltung eine Möglichkeit des Toleranzausgleiches sowohl in x- als auch in y-Richtung.

## Patentansprüche

1. Filterelement, insbesondere Luftentölelement, zur Abscheidung von einer Flüssigkeit, aufweisend ein ringförmig geschlossenes Filtermedium (20), welches an deren Stirnseiten (29) mit Endscheiben versehen ist, von denen eine untere Endscheibe (18) einen durch das Filtermedium gebildeten Innenraum (19) abschließt, in den ein Drainagerohr (22) hineinragt, wobei das Drainagerohr an der oberen Endscheibe (16) über ein Dichtungselement geführt ist, wobei das Dichtungselement am Behälterdeckel (12) dichtend anliegt, **dadurch gekennzeichnet, dass** das Dichtungselement eine konische Dichtung (110) ist, welche in einer konischen Öffnung des Deckels (12) eingefügt ist und das Dichtungselement in eine Halteplatte (111) eingeknüpft ist.

2. Filterelement nach dem vorherigen Anspruch, **dadurch gekennzeichnet, dass** das Dichtungselement einen inneren Hohlraum aufweist, der einen Toleranzausgleich in x- und/oder y-Richtung ermöglicht.

## Claims

1. Filter element, in particular an air-oil separator element, for separating a liquid, featuring a ring-shaped closed filter medium (20) with its front ends (29) provided with end disks, of which a lower end disk (18) closes an internal space (19) formed by the filter medium into which extends a drainage pipe (22), wherein the drainage pipe is led via a sealing element at the upper end disk (16), wherein the sealing element sealingly fits the cover (12) of the recipient, **characterized in that** the sealing element is a conical gasket (110) which is fit into a conical opening of the cover (12) and that the sealing element is knotted into a retaining plate (111).

2. Filter element according to the above claim, **characterized in that** the sealing element features an inner hollow space which enables a tolerance compensation in x and/or y direction.

## Revendications

1. Élément filtrant, en particulier élément de déshuilage de l'air, destiné à la séparation d'un liquide, présentant un milieu filtrant (20) fermé de manière annulaire dont les faces frontales (29) sont pourvues de disques d'extrémité, parmi lesquels un disque d'extrémité inférieur (18) enferme un espace intérieur (19) formé par le milieu filtrant dans lequel pénètre un tube de drainage (22), le tube de drainage étant acheminé sur le disque d'extrémité supérieur (16) par l'intermédiaire d'un élément d'étanchéité, l'élément d'étanchéité étant appliqué de manière étanche sur le couvercle du récipient (12), **caractérisé en ce que** l'élément d'étanchéité est un joint conique (110) qui est introduit dans une ouverture conique du couvercle (12) et que l'élément d'étanchéité est lié dans une plaque de retenue (111).

2. Élément filtrant selon la revendication précédente, **caractérisé en ce que** l'élément d'étanchéité présente un espace creux permettant de compenser des tolérances en sens x et/ou y.
